# EUROPEAN PATENT SPECIFICATION

(11) **EP 3 815 646 B1**
(45) Date of publication and mention of the grant of the patent: **12.07.2023**
(21) Application number: 20204163.8
(22) Date of filing: 27.10.2020
(51) Int. Cl.: A61C 13/15, F27B 17/02

(54) **LIGHT CURING UNIT FOR DENTAL USE WITH SWITCH HIDDEN BY DOOR**
LICHTHÄRTUNGSEINHEIT FÜR ZAHNÄRZTLICHE ZWECKE MIT EINEM DURCH EINE TÜR VERSTECKTEN SCHALTER
UNITÉ DE PHOTODURCISSEMENT POUR USAGE DENTAIRE COMPRENANT UN COMMUTATEUR CACHÉ PAR UNE PORTE

(30) Priority: 29.10.2019 JP 2019196542
(43) Date of publication of application: 05.05.2021
(73) Proprietor: Shofu Inc., Kyoto 605-0983 (JP)
(72) Inventor: TSUBOI, Taro, Kyoto-shi, Kyoto (JP); KUMEDA, Harunobu, Kyoto-shi, kyoto (JP)
(74) Representative: Mewburn Ellis LLP

(56) References cited:
- WO-A1-99/22668
- JP-A- S55 105 607

## Description

### TECHNICAL FIELD

The present invention relates to a light curing unit for dental use configured to radiate light to a dental prosthesis made of a light curable material disposed in a light curing space.

### BACKGROUND ART

Japanese Patent No. 6347840 (Patent Document 1) discloses a light curing unit for dental use including an inside switch disposed inside a space surrounded by a lid with the lid closed and operable to turn on and off a light emitting source with an opening formed, and an outside switch disposed outside the light curing space surrounded by the lid and operable to turn on and off the light emitting source with the lid closed. Specifically, the inside switch, which is disposed inside the light curing space which is surrounded by the lid when the lid is closed and operable to turn on and off the light emitting source, is disposed inside the light curing space for the purpose of being operable with the lid opened, in order to adjust the time for radiation of light for temporary polymerization while radiating the light. The outside switch, which is operable to turn on and off the light emitting source for main polymerization, is disposed outside the light curing space (specifically, at a front surface portion of a case body which is not covered by the lid).

JP S55 105607 A discloses a false teeth polymerization device. It discloses that the surfaces of false teeth are coated with a paste comprising an ultraviolet curing hard resin material in layers for hardening or glossing. The teeth are then placed on a turntable in a polymerization chamber, and a door is closed to turn the table and open shutters drivingly connected with the door. The paste is polymerized by UV irradiation from light sources. The door is then opened to close the shutters automatically.

WO 99/22668 A1 discloses an apparatus for the rapid curing of resinous materials by application of energy from an external source to excite polymerization in a polymerizable system under controlled temperature and pressure. The apparatus comprises a chamber and at least one inert gas flash lamp light source arranged at a predetermined distance from the chamber to irradiate an object positioned on the sample holder. The inert gas light source may be at least one inert gas linear flash lamp positioned to effectively irradiate an object positioned in the chamber. The inert gas flash lamp emits pulse radiation of very high energy and power peaks. The spectral output of the inert gas flash lamp may be in the range between about 350 nm and about 550 nm. The radiant energy emitted by the disclosed apparatus is diffused or flooded to produce an even distribution of light intensity over the entire base of a chamber.

### SUMMARY OF INVENTION

### TECHNICAL PROBLEM

In the light curing unit for dental use according to Patent Document 1, a light curable material that has adhered to a fingertip of an operator often adheres to the key top of the outside switch which is used to turn on and off the light emitting source for main polymerization. The light curable material which has adhered to the key top can be removed in most cases, but cannot be removed in some cases . When a light curable material is removed many times, the key top may be discolored, which may degrade the appearance of the front surface of the light curing unit for dental use. The light curing unit for dental use is placed on top of a workbench to be used. Therefore, if the outside switch is located on the front surface side of the unit, the operator may touch the outside switch by mistake, which may cause erroneous operation.

It is an aim of the present invention to provide a light curing unit for dental use, the appearance of which is not degraded even after a long period of use and which does not easily cause erroneous operation.

### SOLUTION TO PROBLEM

The present invention provides a light curing unit for dental use including: a case including a case body having therein a light curing space and provided with an opening portion in communication with the light curing space and a door configured to close the opening portion; one or more light emitting sources disposed at an inner wall portion of the case body to radiate light to a dental prosthesis made of a light curable material disposed in the light curing space; a power supply circuit disposed in the case body to supply electric power to the one or more light emitting sources according to a condition set using one or more setting switches each having a key top; and a door opening/closing detection means for allowing the electric power to be supplied from the power supply circuit to the one or more light emitting sources only when the door is closed. In the present invention, the one or more setting switches are disposed at a position at which the one or more setting switches are operable when the door is opened, and at which the one or more setting switches are hidden by the door and each key top is not exposed to the light from the one or more light emitting sources when the door is closed.

If the one or more setting switches are disposed at a position at which the one or more setting switches are hidden by the door and each key top is not exposed to the light from the one or more light emitting sources when the door is closed, as in the present invention, the key tops of the switches are not directly exposed to the light from the light emitting sources and, even if a light curable material adheres to the key tops, the light curable material which has adhered to the key tops is not immediately cured and thus can be easily wiped off. Even if the light curable material is not wiped off but remains, the light curable material is not seeable from the outside of the door, and thus does not degrade the appearance of the device. Since the setting switches are hidden by the door, the operator advantageously does not erroneously operate the switches during operation. In addition, the light radiated from the one or more light emitting sources to the light curing space degrades a resin molded product. Therefore, the key tops, which are made of a resin, are degraded if the one or more setting switches are disposed with the key tops exposed to the light curing space . With the present invention, however, such degradation can be suppressed since the key tops are not exposed to the light from the light emitting sources.

The setting switches may be switches that are used to set the irradiation time, the light quantity, etc., make start and stop settings, etc. As a matter of course, in addition, switches other than the setting switches may be provided together with the one or more setting switches.

The one or more setting switches may be disposed at a periphery of the opening portion of the case body and at a position opposed to the door when the door is closed. If the one or more setting switches are disposed at such a position, the periphery of the opening portion of the case body and the back side of the door can be formed in a simple shape, reducing the manufacturing cost.

Preferably, an exterior plate of the door, which faces the opening portion, is formed from a metal material to which the light curable material which has not been cured yet does not easily adhere. Examples of such a metal material include an aluminum plate that has been subjected to an alumite treatment. If the exterior plate is formed from such a material, the light curable material does not easily adhere to the exterior plate, and the light curable material which has adhered and been cured can be easily removed.

Preferably, the light curing unit for dental use further includes a light blocking structure configured to hinder the light from leaking from the light curing space to illuminate the respective key tops of the one or more setting switches when the door is closed. With the use of such a light blocking structure, the key tops of the switches can be reliably prevented from being exposed to the light from the light emitting sources.

Preferably, the light blocking structure includes a frame member made of a light blocking material and interposed between the door and a surface located at a periphery of the opening portion of the case body to surround the opening portion when the door is closed. The light blocking material may be rubber, closed-cell sponge, etc. The frame member may be provided on either of the door and the case body, or may be provided on both of the door and the case body in a distributed manner.

In addition, a recessed portion may be formed along the opening portion to open forward of the opening portion and toward the light curing space; and the respective key tops of the one or more setting switches may be located in the recessed portion. In this case, the door is provided with a blocking plate that serves as the light blocking structure to block an opening of the recessed portion on a side of the light curing space when the door is closed. With such a structure, the key tops of the one or more setting switches can be prevented from being exposed to the light from the light emitting sources.

The light curing unit for dental use preferably includes a display means provided at a front surface portion of the door to display a lapse of a set time set using the one or more setting switches, even if switches are not disposed on the front surface portion of the door. With such a configuration, the operator can notice the status of operation with the door closed.

Preferably, the display means includes a plurality of light emitting elements and a light emission control circuit configured to control the plurality of light emitting elements. In this case, the light emission control circuit may turn on the plurality of light emitting elements before the set time determined in advance elapses, and sequentially turn off the plurality of light emitting elements each time a predetermined time elapses after the set time determined in advance elapses. With this configuration, the status of operation can be intuitively grasped by recognizing the number or quantity of the light emitting elements which are turned on.

### BRIEF DESCRIPTION OF DRAWINGS

Fig. 1 is a perspective view of a light curing unit for dental use according to an embodiment of the present invention with a door closed.
Fig. 2 is a perspective view of the light curing unit for dental use with the door opened.
Fig. 3 is a front view of the light curing unit for dental use with the door opened.
Fig. 4 is a back view of the light curing unit for dental use with the door opened.
Fig. 5 is a schematic sectional view taken along line V-V in Fig. 4.
Fig. 6 is a schematic sectional view taken along line VI-VI in Fig. 4.
Figs. 7A and 7B each illustrate a different example arrangement of setting switches.

### DESCRIPTION OF EMBODIMENTS

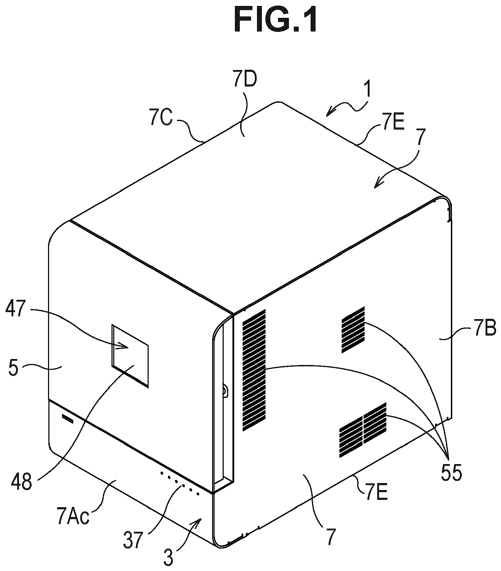

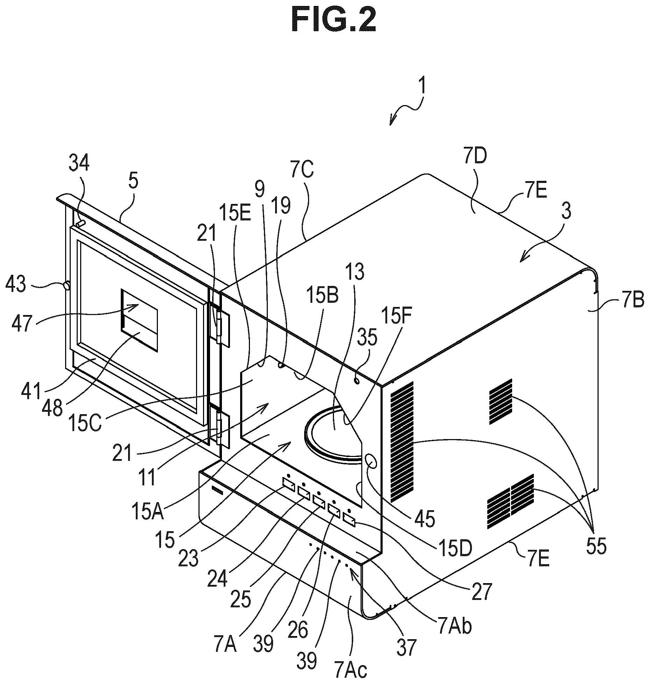

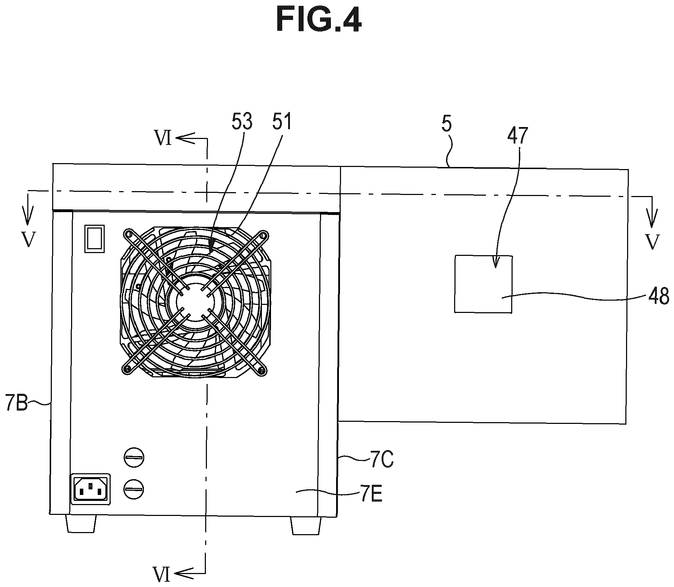

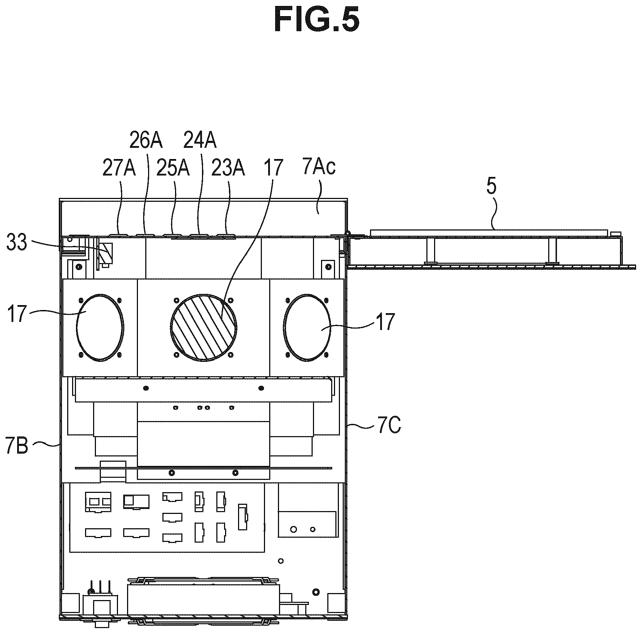

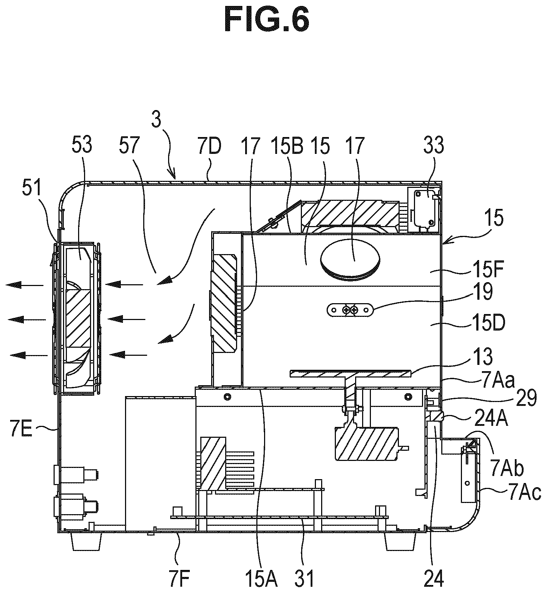

An embodiment of the present invention will be described in detail below with reference to the drawings. Fig. 1 is a perspective view of a light curing unit 1 for dental use according to an embodiment of the present invention with a door 5 closed. Figs. 2, 3, and 4 are a perspective view, a front view, and a back view, respectively, of the light curing unit 1 for dental use with the door 5 opened. Fig. 5 is a schematic sectional view taken along line V-V in Fig. 4. Fig. 6 is a schematic sectional view taken along line VI-VI in Fig. 4. In Figs. 5 and 6, the detailed structure of wires and predetermined parts is omitted.

The light curing unit 1 for dental use according to the present embodiment includes a case 3. The case 3 includes a door 5 and a case body 7. The case body 7 has therein a light curing space 11 and provided with an opening portion 9 in communication with the light curing space 11. The light curing space 11 is surrounded by a wall structure body 15 composed of: a bottom wall portion 15A on which a turn table 13 for placement of a dental prosthesis is disposed; an upper wall portion 15B having a smaller width than that of the bottom wall portion 15A and facing the bottom wall portion 15A; a pair of upright wall portions 15C and 15D configured to extend upright from both ends of the bottom wall portion 15A in the width direction; a pair of inclined wall portions 15E and 15F configured to connect between the pair of upright wall portions 15C and 15D, respectively, and both ends of the upper wall portion 15B in the width direction; and a facing wall portion 15G configured to face the opening portion 9. Four light emitting sources 17 are disposed on the pair of inclined wall portions 15E and 15F, the upper wall portion 15B, and the facing wall portion 15G. The four light emitting sources 17 include a plurality of blue and white light emitting diodes disposed to radiate light toward a dental prosthesis (not illustrated) on the turn table 13. Additional light emitting sources 19 are disposed on the pair of upright wall portions 15C and 15D to radiate light toward the dental prosthesis on the turn table 13. The additional light emitting sources 19 include light emitting diodes configured to emit light with a shorter wavelength than the light emitted from the light emitting diodes of the light emitting sources 17. When such light emitting sources configured to emit light of different wavelengths are provided, light emitting sources configured to emit light of wavelengths matching the properties of the resin to be cured can be prepared, even if light emitting diodes are used as light emitting elements.

In addition, the case body 7 includes: a front-side outer wall 7A in which the opening portion 9 is formed; a pair of lateral-side outer walls 7B and 7C located on the outer side of the pair of upright wall portions 15C and 15D and the pair of inclined wall portions 15E and 15F, respectively; an upper-side outer wall 7D located on the outer side of the upper wall portion 15B; a back-side outer wall 7E located on the outer side of the facing wall portion 15G; and a bottom-side outer wall 7F located on the outer side of the bottom wall portion 15A. The front-side outer wall 7A includes: a first outer wall portion 7Aa in which the opening portion 9 is formed and which extends in the vertical direction; a second outer wall portion 7Ab configured to extend in the horizontal direction from the lower end portion of the first outer wall portion 7Aa; and a third outer wall portion 7Ac configured to extend downward from the distal end portion of the second outer wall portion 7Ab. The width of the second outer wall portion 7Ab is slightly larger than the thickness of the lid 5. The length of the second outer wall portion 7Ab is substantially equal to the width of the lid 5. As a result, as illustrated in Fig. 1, the lid 5 is fitted in the space above the second outer wall portion 7Ab when the door 5 is closed.

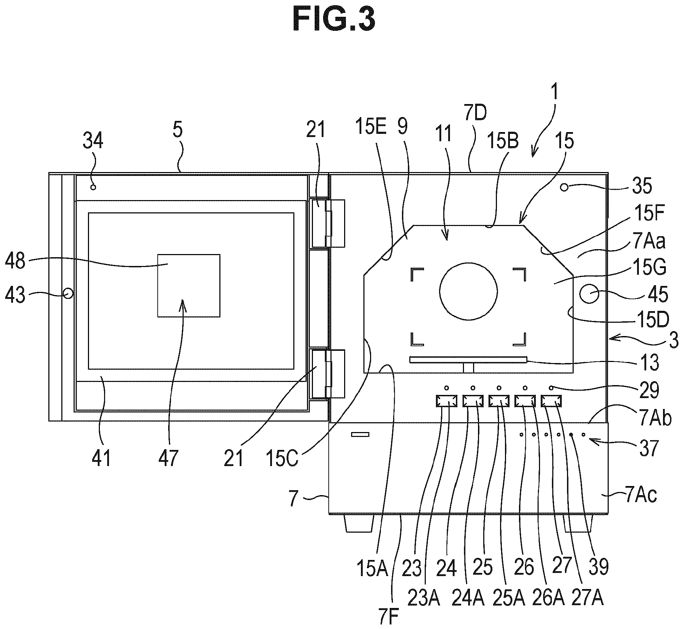

As illustrated in Figs. 2 and 3, a pair of hinges 21 are disposed between the first outer wall portion 7Aa of the front-side outer wall 7A and a back surface 5B of the door 5 to attach the door 5 to the case body 7 in a freely openable manner. Respective key tops 23A to 27A, which are made of a resin, of five setting switches 23 to 27, which are push switches, project from a portion (surface) of the first outer wall portion 7Aa on the lower side with respect to the opening portion 9 of the front-side outer wall 7A and adjacent to the second outer wall portion 7Ab. Respective indication lamps 29 are disposed above the key tops 23A to 27A, and configured to turn on to indicate that the corresponding switches are pressed. In the present embodiment, the setting switches 23 to 27 are used to set the irradiation time of the light emitting sources (17, 19) . The five setting switches 23 to 27 are pressed by an operator to set the irradiation time of the light emitting sources (17, 19) to different set times determined in advance.

If the setting switches 23 to 27 are disposed at such positions, the setting switches 23 to 27 are disposed at the periphery of the opening portion 9 of the case body 7 and at a position opposed to the door 5 when the door 5 is closed. That is, with this configuration, the setting switches 23 to 27 are operable when the door 5 is opened, and the setting switches 23 to 27 are hidden by the door 5 and the key tops 23A to 27A are not exposed to the light from the light emitting sources (17, 19) when the door 5 is closed. As a result, even if a light curable material adheres to the key tops, the light curable material is not immediately cured, and thus can be easily wiped off. Even if the light curable material is not wiped off but remains, the light curable material is not seeable from the outside of the door 5, and thus does not degrade the appearance of the device. Since the setting switches 23 to 27 are hidden by the door, the operator advantageously does not erroneously operate the switches during operation.

A power supply circuit 31 and a limit switch 33 are disposed in the case body 7. The power supply circuit 31 supplies electric power to the plurality of light emitting sources (17, 19) for a set time set using the setting switches 23 to 27. The limit switch 33 serves as a door opening/closing detection means for allowing the electric power to be supplied from the power supply circuit 31 to the light emitting sources (17, 19) according to the setting made using the setting switches 23 to 27 only when the door 5 is closed. A through hole 35 is formed in the upper region of the first outer wall portion 7Aa of the front-side outer wall 7A to enable a push bar 34 provided on the back surface side of the door 5 to push the limit switch 33 when the door 5 is closed.

In the present embodiment, a display means 37 is provided on the third outer wall portion 7Ac of the front-side outer wall 7A of the case body 7, which is not covered by the door 5, to display the lapse of the set time, which is set using the setting switches 23 to 27, even if switches are not disposed on the front surface portion of the door 5. The display means 37 includes a plurality of light emitting elements 39 and a light emission control circuit (not illustrated) configured to control the plurality of light emitting elements 39. In this case, the light emission control circuit turns on the plurality of light emitting elements 39 before the set time determined in advance elapses, and sequentially turns off the plurality of light emitting elements 39 each time a predetermined time elapses after the set time determined in advance elapses. With this configuration, the operator can notice the status of operation with the door 5 closed, and the operator can intuitively grasp the status of operation by recognizing the number or quantity of the light emitting elements 39 which are turned on. As a matter of course, the display means 37 may be provided on the front surface portion of the door 5.

In the present embodiment, a frame member 41 is provided on the back surface side of the door 5. The frame member 41 serves as a light blocking structure configured to surround the opening portion 9 when the door 5 is closed to positively hinder light from leaking from the light curing space 11 to illuminate the respective key tops 23A to 27A of the setting switches 23 to 27. The frame member 41 according to the present embodiment is formed from a light blocking material such as rubber or closed-cell sponge, and compressed as interposed between the door 5 and the surface of the first outer wall portion 7Aa, which is located at the periphery of the opening portion 9, of the case body 7 when the door 5 is closed. In order to establish and maintain the compressed state, magnets 43 and 45 are fixed to the back surface of the door 5 and the front surface of the first outer wall portion 7Aa, respectively, to attract each other when the door 5 is closed. With the use of such a light blocking structure, the respective key tops 23A to 27A of the setting switches 23 to 27 can be reliably prevented from being exposed to light from the light emitting sources 17 and 19.

The frame member 41 may be provided on either of the door 5 and the case body 7, or may be provided on both of the door 5 and the case body 7 in a distributed manner. While the light blocking structure is constituted of the frame member 41 in the present embodiment, it is not necessary that the light blocking structure should have a frame shape to surround the opening portion 9 as with the frame member 41, and it is a matter of course that the light blocking structure may be formed to continuously extend straight in the horizontal direction above the respective key tops 23A to 27A of the setting switches 23 to 27.

In the present embodiment, a window portion 47 is provided at the center portion of the door 5 to allow looking into the light curing space 11 with the door 5 closed. A replaceable light reducing plate 48 that is optically transparent and that reduces light is mounted to the window portion 47. The light reducing plate 48 is preferably formed from a colored glass plate, a colored polycarbonate plate, etc. The use of a material that is used in a welding mask etc. for the purpose of protecting the eyes of an operator as the light reducing plate 48 can reduce the price of the device. In addition, the use of a glass plate, which is not easily soiled, as the light reducing plate 48 allows easy removal of soils.

In the present embodiment, in addition, as illustrated in Figs. 4 and 6, a discharge fan 53 is mounted to a discharge port 51 provided in the back-side outer wall 7E of the case body 7. In addition, the pair of lateral-side outer walls 7B and 7C are provided with suction ports 55 through which outside air is drawn into an internal space 57 of the case body 7. As illustrated in Fig. 6, a cooling flow path is formed in the internal space 57 between the case body 7 and the wall structure body 15 to allow a flow of air for releasing heat generated from the plurality of light emitting sources 17, 19 and a drive circuit therefor. If a cooling flow path that leads from the suction ports 55 which are provided in the pair of lateral-side outer walls 7B and 7C to the discharge port 51 through the internal space 57 between the case body 7 and the wall structure body 15 is formed as in the present embodiment, the wall structure body 15 which has therein the light curing space 11 can also be cooled together, which effectively prevents the temperature in the light curing space 11 from becoming unnecessarily high.

### (Modification)

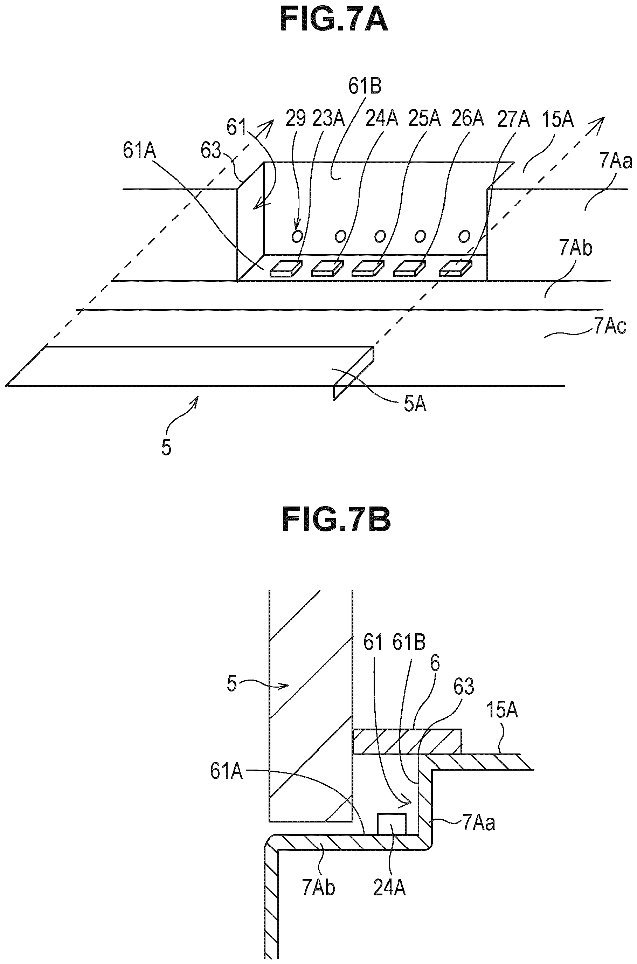

In the embodiment described above, the respective key tops 23A to 27A, which are made of a resin, of the five setting switches 23 to 27 are disposed at a portion of the first outer wall portion 7Aa on the lower side with respect to the opening portion 9 of the front-side outer wall 7A of the case body 7 and adjacent to the second outer wall portion 7Ab. However, the arrangement of the setting switches 23 to 27 is not limited to that according to the embodiment described above. Figs. 7A and 7B illustrate a different arrangement example of the setting switches 23 to 27. In the example arrangement in Fig. 7, a recessed portion 61 that opens toward the front side of the opening portion 9 and into the light curing space 11 along the opening portion 9 and a blocking plate 6 that blocks an opening portion 63 of the recessed portion 61 on the side of the light curing space 11 are provided. The respective key tops 23A to 27A, which are made of a resin, of the setting switches 23 to 27 project from a bottom portion 61A, which is continuous with the second outer wall portion 7Ab, of the recessed portion 61. In addition, indication lamps 29 are provided on a lateral portion 61B located between the bottom wall portion 15A of the wall structure body 15 and the bottom portion 61A of the recessed portion 61. The door 5 is provided with a blocking plate 5A, as a light blocking structure, configured to block the opening portion 63 of the recessed portion 61 on the side of the light curing space 11 when the door 5 is closed. Also with such a structure, the respective key tops 23A to 27A, which are made of a resin, of the setting switches 23 to 27 can be prevented from being exposed to light from the light emitting sources (17, 19) . The recessed portion 61 may be provided at a different portion of the periphery of the opening portion 9. Alternatively, the indication lamps 29 may be provided on the bottom portion 61A of the recessed portion 61, and the key tops 23A to 27A may be disposed on the lateral portion 61B of the recessed portion 61. The recessed portion 61 may be provided anywhere at the periphery of the opening portion 9.

The embodiment described above is merely an example of embodiments of the present invention, and the scope of the present invention is defined by the appended claims.

### INDUSTRIAL APPLICABILITY

In the present invention, the one or more setting switches are disposed at a position at which the setting switches are hidden by the door and each key top is not exposed to the light from the one or more light emitting sources when the door is closed. Thus, the key tops of the switches are not directly exposed to the light from the light emitting sources and, even if a light curable material adheres to the key tops, the light curable material which has adhered to the key tops is not immediately cured and can be easily wiped off. Even if the light curable material is not wiped off but remains, in addition, the light curable material is not seeable from the outside of the door, and thus does not degrade the appearance of the device. Since the setting switches are hidden by the door, further, the operator advantageously does not erroneously operate the switches during operation.

## Claims

1. A light curing unit for dental use comprising:
a case (3) including a case body (7) having therein a light curing space (11) and provided with an opening portion (9) in communication with the light curing space and a door (5) configured to close the opening portion;
one or more light emitting sources (17,19) disposed at an inner wall portion of the case body (7) to radiate light to a dental prosthesis made of a light curable material disposed in the light curing space (11);
a power supply circuit (31) disposed in the case body (7) to supply electric power to the one or more light emitting sources (17,19) according to a condition set using one or more setting switches (23 to 27) each having a key top (23A to 27A); and
a door opening/closing detection means (33) for allowing the electric power to be supplied from the power supply circuit (31) to the one or more light emitting sources (17,19) only when the door (5) is closed, **characterized in that**:
the one or more setting switches (23 to 27) are disposed at a position at which the one or more setting switches are operable when the door (5) is opened, and at which the one or more setting switches are hidden by the door and each key top (23A to 27A) is not exposed to the light from the one or more light emitting sources (17,19) when the door (5) is closed.

2. The light curing unit for dental use according to claim 1, wherein
each key top (23A to 27A) is made of a resin.

3. The light curing unit for dental use according to claim 1, wherein
the one or more setting switches (23 to 27) are disposed at a periphery of the opening portion (9) of the case body (7) and at a position opposed to the door (5) when the door is closed.

4. The light curing unit for dental use according to claim 1, wherein
an exterior plate of the door (5) is formed from a metal material to which the light curable material which has not been cured yet does not easily adhere.

5. The light curing unit for dental use according to claim 1, further comprising:
a light blocking structure (41) configured to hinder the light from leaking from the light curing space to illuminate the respective key tops (23A to 27A) of the one or more setting switches (23 to 27) when the door (5) is closed.

6. The light curing unit for dental use according to claim 5, wherein
the light blocking structure includes a frame member (41) made of a light blocking material and interposed between the door (5) and a surface located at a periphery of the opening portion (9) of the case body (7) to surround the opening portion when the door (5) is closed.

7. The light curing unit for dental use according to claim 6, wherein:
a recessed portion (61) is formed along the opening portion (9) to open forward of the opening portion and toward the light curing space (11);
the respective key tops (23A to 27A) of the one or more setting switches (23 to 27) are located in the recessed portion (61); and
the door (5) is provided with a blocking plate (5A) that serves as the light blocking structure to block an opening of the recessed portion on (61) a side of the light curing space (11) when the door (5) is closed.

8. The light curing unit for dental use according to any one of claims 1 to 7, further comprising:
a display means (35) provided at a front surface portion of the door (5) to display a lapse of a set time set using the one or more setting switches (23 to 27).

9. The light curing unit for dental use according to claim 8, wherein:
the display means (35) includes a plurality of light emitting elements (39) and a light emission control circuit configured to control the plurality of light emitting elements; and
the light emission control circuit turns on the plurality of light emitting elements (39) before the set time determined in advance elapses, and sequentially turns off the plurality of light emitting elements each time a predetermined time elapses after the set time determined in advance elapses.

## Patentansprüche

1. Lichthärtungseinheit zur Verwendung in der Zahnheilkunde, umfassend:
ein Gehäuse (3), einschließlich eines Gehäusekörpers (7), der einen Lichthärtungsraum (11) darin aufweist und mit einem Öffnungsabschnitt (9) in Kommunikation mit dem Lichthärtungsraum und einer Tür (5) bereitgestellt ist, die ausgelegt ist, um den Öffnungsabschnitt zu verschließen;
eine oder mehrere lichtemittierende Quellen (17, 19), die an einem Innenwandabschnitt des Gehäusekörpers (7) angeordnet sind, um Licht auf eine Zahnprothese auszustrahlen, die aus einem lichthärtbaren Material besteht, die in dem Lichthärtungsraum (11) angeordnet ist;
eine Leistungsversorgungsschaltung (31), die in dem Gehäusekörper (7) angeordnet ist, um die eine oder die mehreren lichtemittierenden Quellen (17, 19) gemäß einer Bedingung mit elektrischer Leistung zu versorgen, die unter Verwendung eines oder mehrerer Einstellschalter (23 bis 27), von denen jeder ein Tastenoberteil (23A bis 27A) aufweist, eingestellt wird; und
ein Türöffnungs-/-schließdetektionsmittel (33) zum Ermöglichen, dass elektrische Leistung von der Leistungsversorgungsschaltung (31) nur dann an die eine oder die mehreren lichtemittierenden Quellen (17, 19) zugeführt wird, wenn die Tür (5) geschlossen ist, **dadurch gekennzeichnet, dass**:
der eine oder die mehreren Einstellschalter (23 bis 27) an einer Position angeordnet sind, an der der eine oder die mehreren Einstellschalter betätigbar sind, wenn die Tür (5) geöffnet ist, und an der der eine oder die mehreren Einstellschalter von der Tür versteckt werden und kein Tastenoberteil (23A bis 27A) gegenüber dem Licht aus der einen oder den mehreren lichtemittierenden Quellen (17, 19) ausgesetzt ist, wenn die Tür (5) geschlossen ist.

2. Lichthärtungseinheit zur Verwendung in der Zahnheilkunde nach Anspruch 1, wobei jedes Tastenoberteil (23A bis 27A) aus einem Harz besteht.

3. Lichthärtungseinheit zur Verwendung in der Zahnheilkunde nach Anspruch 1, wobei
der eine oder die mehreren Einstellschalter (23 bis 27) an einem Umfang des Öffnungsabschnitts (9) des Gehäusekörpers (7) und an einer der Tür (5) gegenüberliegenden Position angeordnet sind, wenn die Tür geschlossen ist.

4. Lichthärtungseinheit zur Verwendung in der Zahnheilkunde nach Anspruch 1, wobei
eine Außenplatte der Tür (5) aus einem Metallmaterial ausgebildet ist, an das das lichthärtbare Material, das noch nicht gehärtet wurde, nicht ohne weiteres anhaftet.

5. Lichthärtungseinheit zur Verwendung in der Zahnheilkunde nach Anspruch 1, das ferner Folgendes umfasst:
eine lichtblockierende Struktur (41), die ausgelegt ist, um zu verhindern, dass Licht aus dem Lichthärtungsraum austritt, um die entsprechenden Tastenoberteile (23A bis 27A) des einen oder der mehreren Einstellschalter (23 bis 27) zu beleuchten, wenn die Tür (5) geschlossen ist.

6. Lichthärtungseinheit zur Verwendung in der Zahnheilkunde nach Anspruch 5, wobei
die lichtblockierende Struktur ein Rahmenelement (41) aus einem lichtblockierenden Material umfasst, das zwischen der Tür (5) und einer Oberfläche angeordnet ist, die sich an einem Umfang des Öffnungsabschnitts (9) des Gehäusekörpers (7) befindet, um den Öffnungsabschnitt zu umgeben, wenn die Tür (5) geschlossen ist.

7. Lichthärtungseinheit zur Verwendung in der Zahnheilkunde nach Anspruch 6, wobei:
ein vertiefter Abschnitt (61) entlang des Öffnungsabschnitts (9) ausgebildet ist, um sich von dem Öffnungsabschnitt nach vorne und in Richtung des Lichthärtungsraums (11) zu öffnen;
die entsprechenden Tastenoberteile (23A bis 27A) des einen oder der mehreren Einstellschalter (23 bis 27) in dem vertieften Abschnitt (61) angeordnet sind; und
die Tür (5) mit einer blockierenden Platte (5A) bereitgestellt ist, die als die lichtblockierende Struktur dient, um eine Öffnung des vertieften Abschnitts (61) auf einer Seite des Lichthärtungsraums (11) zu blockieren, wenn die Tür (5) geschlossen ist.

8. Lichthärtungseinheit zur Verwendung in der Zahnheilkunde nach einem der Ansprüche 1 bis 7, die ferner Folgendes umfasst:
ein Anzeigemittel (35), das an einem Vorderseitenabschnitt der Tür (5) bereitgestellt ist, um ein Verstreichen einer eingestellten Zeit anzuzeigen, die unter Verwendung des einen oder der mehreren Einstellschalter (23 bis 27) eingestellt wurde.

9. Lichthärtungseinheit zur Verwendung in der Zahnheilkunde nach Anspruch 8, wobei:
das Anzeigemittel (35) eine Vielzahl von lichtemittierenden Elementen (39) und eine Lichtemissionssteuerschaltung umfasst, die ausgelegt ist, um die Vielzahl von lichtemittierenden Elementen zu steuern; und
die Lichtemissionssteuerschaltung die Vielzahl von lichtemittierenden Elementen (39) vor Verstreichen der im Vorhinein bestimmten eingestellten Zeit einschaltet und die Vielzahl von lichtemittierenden Elementen jedes Mal, wenn eine vorbestimmte Zeit verstrichen ist, nacheinander ausschaltet, nachdem die im Vorhinein bestimmte eingestellte Zeit verstrichen ist.

## Revendications

1. Unité de photopolymérisation pour utilisation dentaire comprenant :
un boîtier (3) incluant un corps de boîtier (7) présentant en son sein un espace de photopolymérisation (11) et pourvu d'une partie d'ouverture (9) en communication avec l'espace de photopolymérisation et une porte (5) configurée pour fermer la partie d'ouverture ;
une ou plusieurs sources électroluminescentes (17, 19) disposées au niveau d'une partie de paroi interne du corps de boîtier (7) pour rayonner de la lumière vers une prothèse dentaire constituée d'un matériau photopolymérisable disposé dans l'espace de photopolymérisation (11) ;
un circuit d'alimentation électrique (31) disposé dans le corps de boîtier (7) pour fournir une énergie électrique aux une ou plusieurs sources électroluminescentes (17, 19) selon une condition établie en utilisant un ou plusieurs commutateurs de réglage (23 à 27) présentant chacun un dessus de touche (23A à 27A) ; et
des moyens de détection d'ouverture/fermeture de porte (33) pour permettre à l'énergie électrique d'être alimentée à partir du circuit d'alimentation électrique (31) vers les une ou plusieurs sources électroluminescentes (17, 19) uniquement lorsque la porte (5) est fermée, **caractérisée en ce que** :
les un ou plusieurs commutateurs de réglage (23 à 27) sont disposés dans une position dans laquelle les un ou plusieurs commutateurs de réglage peuvent être actionnés lorsque la porte (5) est ouverte, et dans laquelle les un ou plusieurs commutateurs de réglage sont cachés par la porte et chaque dessus de touche (23A à 27A) n'est pas exposé à la lumière provenant des une ou plusieurs sources électroluminescentes (17, 19) lorsque la porte (5) est fermée.

2. Unité de photopolymérisation pour utilisation dentaire selon la revendication 1, dans laquelle :
chaque dessus de touche (23A à 27A) est constitué d'une résine.

3. Unité de photopolymérisation pour utilisation dentaire selon la revendication 1, dans laquelle :
les un ou plusieurs commutateurs de réglage (23 à 27) sont disposés à une périphérie de la partie d'ouverture (9) du corps de boîtier (7) et dans une position opposée à la porte (5) lorsque la porte est fermée.

4. Unité de photopolymérisation pour utilisation dentaire selon la revendication 1, dans laquelle :
une plaque extérieure de la porte (5) est formée à partir d'un matériau métallique auquel le matériau photopolymérisable qui n'a pas encore été polymérisé n'adhère pas facilement.

5. Unité de photopolymérisation pour utilisation dentaire selon la revendication 1, comprenant en outre :
une structure de blocage de lumière (41) configurée pour empêcher la lumière de fuir depuis l'espace de photopolymérisation pour éclairer les dessus de touche respectifs (23A à 27A) des un ou plusieurs commutateurs de réglage (23 à 27) lorsque la porte (5) est fermée.

6. Unité de photopolymérisation pour utilisation dentaire selon la revendication 5, dans laquelle :
la structure de blocage de lumière inclut un élément de cadre (41) constitué d'un matériau de blocage de lumière et interposé entre la porte (5) et une surface située au niveau d'une périphérie de la partie d'ouverture (9) du corps de boîtier (7) pour entourer la partie d'ouverture lorsque la porte (5) est fermée.

7. Unité de photopolymérisation pour utilisation dentaire selon la revendication 6, dans laquelle :
une partie évidée (61) est formée le long de la partie d'ouverture (9) pour s'ouvrir vers l'avant de la partie d'ouverture et vers l'espace de photopolymérisation (11) ;
les dessus de touche respectifs (23A à 27A) des un ou plusieurs commutateurs de réglage (23 à 27) sont situés dans la partie évidée (61) ; et
la porte (5) est pourvue d'une plaque de blocage (5A) qui sert de structure de blocage de lumière pour bloquer une ouverture de la partie évidée (61) sur un côté de l'espace de photopolymérisation (11) lorsque la porte (5) est fermée.

8. Unité de photopolymérisation pour utilisation dentaire selon l'une quelconque des revendications 1 à 7, comprenant en outre :
des moyens d'affichage (35) prévus au niveau d'une partie de surface avant de la porte (5) pour afficher un laps de temps réglé en utilisant les un ou plusieurs commutateurs de réglage (23 à 27) .

9. Unité de photopolymérisation pour utilisation dentaire selon la revendication 8, dans laquelle :
les moyens d'affichage (35) incluent une pluralité d'éléments électroluminescents (39) et un circuit de commande d'émission de lumière configuré pour commander la pluralité d'éléments électroluminescents ; et
le circuit de commande d'émission de lumière active la pluralité d'éléments électroluminescents (39) avant l'écoulement du temps réglé déterminé à l'avance, et désactive de manière séquentielle la pluralité d'éléments électroluminescents chaque fois qu'un temps prédéterminé s'écoule après l'écoulement du temps réglé déterminé à l'avance.
